# EUROPÄISCHE PATENTANMELDUNG

(11) **EP 1 767 579 A1**
(43) Veröffentlichungstag der Anmeldung: **28.03.2007**
(21) Anmeldenummer: 06018709.3
(22) Anmeldetag: 06.09.2006
(51) Int. Cl.: C08L 83/04, C08K 9/06

(54) **Siliconmassen mit hervorragender Viskositätsstabilität**

(30) Priorität: 22.09.2005 DE 102005045336
(71) Anmelder: Wacker Chemie AG, 81737 München (DE)
(72) Erfinder: Wörner, Christof, Dr., 84489 Burghausen (DE); Achenbach, Frank, Dr., 84359 Simbach am Inn (DE)
(74) Vertreter: Fritz, Helmut

(57) **Zusammenfassung**

Die vorliegende Erfindung betrifft Siliconmassen, insbesondere vernetzbare Siliconmassen, die sich durch eine hervorragende Lagerstabilität auszeichnen, womit eine weitgehend gleichbleibende Fließfähigkeit und Viskosität der Siliconmasse gemeint ist.

## Beschreibung

Die vorliegende Erfindung betrifft Siliconmassen, insbesondere vernetzbare Siliconmassen, die sich durch eine hervorragende Lagerstabilität auszeichnen, womit eine weitgehend gleich bleibende Fließfähigkeit und Viskosität der Siliconmasse gemeint ist.

Siliconmassen, welche zur Herstellung von Siliconelastomeren eingesetzt werden, enthalten typischerweise Füllstoffe, insbesondere verstärkende Füllstoffe, um den daraus hergestellten Siliconelastomeren ausreichende mechanische Festigkeit und Elastizität zu verleihen. Übliche verstärkende Füllstoffe sind Kieselsäuren und Russe, die eine spezifische Oberfläche von mindestens 30 m²/g aufweisen. Die besonders bevorzugt eingesetzten pyrogen hergestellten Kieselsäuren fallen herstellungsbedingt jedoch zunächst als hydrophile Teilchen an, was deren Verwendung in Siliconmassen sehr einschränkt, weil die durch den hydrophilen Charakter der Kieselsäure bedingten intensiven Wechselwirkungen mit den in der Masse enthaltenen Polyorganosiloxanen zu einem drastischen Viskositätsanstieg, wie beispielsweise Verstrammung bis hin zur Brüchigkeit, führen, wodurch die weitere Verarbeitung der Siliconmasse erschwert oder gar unterbunden wird. Um gut fließfähige, viskositätsstabile Siliconmassen zu erhalten, ist es aus diesem Grund unumgänglich, die Kieselsäure zu hydrophobieren.

Die Hydrophobierung der Kieselsäure kann hierbei in einem separaten Verfahrensschritt, wie in der deutschen Offenlegungsschrift DE 38 39 900 A1 beschrieben, erfolgen. Die resultierende hydrophobe Kieselsäure kann dann nachfolgend in kontinuierlich oder diskontinuierlich arbeitenden Mischaggregaten im Polyorganosiloxan dispergiert werden. Demgegenüber wird in der deutschen Patentschrift DE 25 35 334 A1 die Herstellung von Siliconmassen beschrieben, wobei die hydrophile Kieselsäure im in-situ Verfahren mit Silazanen in Gegenwart von Polysiloxanen und Wasser hydrophobiert wird. Beiden Varianten ist gemein, dass letztlich eine hydrophobe Kieselsäure in der Siliconmasse vorliegt, was die Lagerstabilität der Masse hinsichtlich ihres rheologischen Verhaltens erheblich verbessert.

Trotz der durch Verwendung hydrophober Kieselsäuren erzielten Verbesserung in der Lagerstabilität, ist doch eine im Allgemeinen stetige Viskositätszunahme füllstoffhaltiger Siliconmassen mit der Lagerzeit zu verzeichnen, wodurch das Verarbeitungsverhalten nachteilig beeinträchtigt wird. Als besonders kritisch erweisen sich hierbei vernetzbare Siliconmassen, insbesondere dann, wenn diese SiH-haltige Verbindungen enthalten.

Die deutsche Offenlegungsschrift DE 103 53 062 A1 beschreibt lagerstabile additionsvernetzbare, füllstoffhaltige Siliconmassen, die dadurch charakterisiert sind, dass diese einen spezifiziert niedrigen Gehalt an SiOH-Gruppen aufweisen. Obgleich auf diese Weise eine erhebliche Verbesserung in der Lagerstabilität herbeigeführt werden kann, ist es produktionstechnisch sehr schwierig, den Gehalt des Polymers an SiOH-Gruppen im ppm-Bereich hinreichend genau und zuverlässig einzustellen, was wiederum Schwankungen in den rheologischen Eigenschaften zur Folge hat.

Weiterhin wird in der deutschen Offenlegungsschrift DE 195 45 365 A1 ein Verfahren zur Herstellung viskositätsstabiler additionsvernetzbarer Organopolysiloxanmassen beschrieben, welche zuvor hydrophobierte, verstärkend wirkende oxidische Füllstoffe enthalten, das dadurch gekennzeichnet wird, dass niedermolekulare Silanolverbindungen, wie beispielsweise Trimethylsilanol, zugesetzt werden. Dieses. Verfahren hat u.a. den Nachteil, dass diese Silanolverbindungen den Anteil flüchtiger und extrahierbarer Bestandteile erhöhen und zu geruchlichen Beeinträchtigungen bei der Verarbeitung Anlass geben.

Gegenüber dem zuvor beschriebenen Stand der Technik bestand daher die Aufgabe, die Lagerstabilität von Siliconmassen, die pyrogen hergestellte, hydrophobe Kieselsäure und SiH-Vernetzer enthalten, auf produktionstechnisch einfache Weise zu verbessern, ohne die Nachteile der Verfahren gemäß dem Stand der Technik in Kauf nehmen zu müssen.

Es wurde nun überraschend gefunden, dass nicht nur, wie zu erwarten war, der Grad der Hydrophobierung der Kieselsäure von maßgeblichem Einfluss ist, sondern dass die Lagerstabilität der Siliconmasse durch einen bestimmten niedrigen Ammoniakgehalt entscheidend verbessert werden kann, selbst und gerade dann, wenn es sich um SiH-Verbindungen enthaltende Siliconmassen handelt.

Die Erfindung beruht darauf, dass bei einem bestimmten niedrigen Ammoniakgehalt von mindestens 10 bis maximal 110 Gew.-ppm, entsprechend 8 - 90 Gew.-ppm Stickstoff, ausgezeichnet lagerstabile Siliconmassen, welche pyrogen hergestellte, hydrophobierte Kieselsäure und SiH-haltige Vernetzer enthalten, erhalten werden. Dies zeigt sich darin, dass bei einem Ammoniakgehalt von 10 - 110 Gew.-ppm ein Anstieg der Viskosität über mehrere Monate gänzlich verhindert oder zumindest drastisch reduziert wird. Diese Verbesserung tritt nicht nur bei üblichen Lagertemperaturen von bis zu 35°C in Erscheinung, sondern ist selbst bei höheren Lagertemperaturen (50°C) festzustellen.

Gegenstand der vorliegenden Erfindung sind daher lagerstabile additionsvernetzbare Siliconmassen, enthaltend
- (A): 100 Gewichts-Teile mindestens eines Polydiorganosiloxans mit einem mittleren Polymerisationsgrad zwischen 20 und 10.000 und einem Anteil alkenylfunktioneller Organosiloxy-Einheiten zwischen 0,02 und 20 Mol-%,
- (B): 5 - 90 Gewichts-Teile mindestens einer pyrogen hergestellten, hydrophobierten Kieselsäure mit einer spezifischen Oberfläche von mindestens 50 m²/g,
- (C): 0,1-50 Gewichts-Teile mindestens einer siliziumorganischen Verbindung, welche mindestens drei an Silizium gebundene Wasserstoffatome pro Molekül enthält,
- (D): 10-110 Gew.-ppm bezogen auf die Gesamtmasse der Bestandteile (A) bis (C) Ammoniak oder einen Anteil einer Ammoniak freisetzenden Verbindung, mit der Maßgabe, dass dieser Anteil einer Freisetzung von 10-110 Gew.-ppm Ammoniak entspricht, wobei die Freisetzung des Ammoniaks vorzugsweise thermisch oder hydrolytisch erfolgt, und
- (E): Hydrosilylierungskatalysator,
worin die Bestandteile (A) bis (E) zu einer einzigen Komponente zusammengefasst oder in mehreren Komponenten vorliegen können.

Bevorzugt ist die Bildung zweier Komponenten, wobei die eine den Hydrosilylierungskatalysator (E) enthält und die andere den SiH-haltigen Vernetzer (C).

Die Zusammensetzung des Polydiorganosiloxans (A) entspricht vorzugsweise der durchschnittlichen allgemeinen Formel (1)

**R¹ₓR²_{y}SiO_{(4-x-y)/2}** (1),

worin
- **R¹**: einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff-Mehrfachbindungen enthält, bedeutet,
- **R²**: eine OH-Gruppe ist oder ein einwertiger, gegebenenfalls halogen- oder cyanosubstituierter, über SiC-gebundener C₁-C₁₀-Kohlenwasserstoffrest ist, welcher keine aliphatischen Kohlenstoff-Kohlenstoff-Mehrfachbindungen enthält,
- **x**: eine positive Zahl ist, mit der Maßgabe, dass durchschnittlich mindestens zwei Reste **R¹** pro Polydiorganosiloxan-Kette vorhanden sind, und
- **y**: eine Zahl zwischen 1,6 und 2,0 ist,
worin die Reste **R¹** sowie **R²** jeweils gleich oder verschieden sein können.

Die Alkenylgruppen **R¹** sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Die Reste **R¹** können in jeder Position der Polymerkette, insbesondere an den endständigen Siliciumatomen, gebunden sein.

Beispiele für unsubstituierte Reste **R²** sind Alkylreste, wie beispielsweise der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie beispielsweise der n-Hexylrest, Heptylreste, wie der n-Heptylrest, Octylreste, wie der n-Octylrest und iso-Octylreste, wie beispielsweise der 2,2,4-Trimethylpentylrest, Nonylreste, wie beispielsweise der n-Nonylrest, Decylreste, wie der n-Decylrest; Alkenylreste, wie beispielsweise der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie beispielsweise o-, m-, p-Tolylreste und Ethylphenylreste; Aralkylreste, wie der Benzylrest, der alpha-und der β-Phenylethylrest.

Beispiele für substituierte Kohlenwasserstoffreste als Reste **R²** sind halogenierte Kohlenwasserstoffe, wie beispielsweise der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

**R²** weist vorzugsweise 1 bis 6 Kohlenstoffatome auf. Insbesondere bevorzugt sind Methyl, 3,3,3-Trifluorpropyl und Phenyl.

Die Struktur der Alkenylgruppen enthaltenden Polydiorganosiloxane (A) kann linear, cyclisch oder auch verzweigt sein. Der Gehalt an verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung linearer, Vinylgruppen enthaltender Polydimethylsiloxane mit einer Viskosität von vorzugsweise 0,2 bis 5.000 Pas, insbesondere 1 bis 2.000 Pas bei 25°C.

Bestandteil (B) der erfindungsgemäßen Siliconmasse ist feinteilige, pyrogen hergestellte, hydrophobierte Kieselsäure mit einer nach BET gemessenen spezifischen Oberfläche von mindestens 50 m²/g, bevorzugt 100 bis 800 m²/g, besonders bevorzugt 150 bis 400 m²/g.

Die Oberflächenbehandlung kann durch die dem Fachmann wohl bekannten Verfahren zur Hydrophobierung feinteiliger Feststoffe erzielt werden. Die Hydrophobierung kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind siliziumorganische Verbindungen, die mit der Füllstoffoberfläche unter Ausbildung kovalenter Bindungen zu reagieren vermögen oder dauerhaft an der Füllstoffoberfläche physisorbiert werden.

In einer bevorzugten Ausführungsform erfolgt die Hydrophobierung der pyrogen hergestellten Kieselsäure in einem separaten Verfahrensschritt, wie beispielsweise in der deutschen Offenlegungsschrift DE 38 39 900 A1 beschrieben. Dies hat den Vorteil, dass das sich anschließende Vermischen mit dem Polydiorganosiloxan (A) auf effektive Weise in einem kontinuierlich arbeitenden Mischaggregat erfolgen kann. Allerdings bewirken die hohen Scherkräfte, welche beim Dispergieren einer pyrogen hergestellten, vorhydrophobierten Kieselsäure in ein Polydiorganosiloxan auftreten, eine teilweise Destrukturierung der Kieselsäure und damit Freilegung nur partiell oder gar nicht hydrophobierter Bereiche der Kieselsäureoberfläche, wodurch die Lagerstabilität der resultierenden vernetzbaren Siliconmassen nachteilig beeinflusst wird. Die auf diese Weise hergestellten Siliconmassen können jedoch durch den erfindungsgemäß niedrigen Gehalt an Ammoniak besonders nachhaltig stabilisiert werden.

Bevorzugte Hydrophobierungsmittel entsprechen den allgemeinen Formeln (2) oder (3)

**R³₄₋ₐSiAₐ** (2)

**(R³₃Si)_{b}B** (3),

worin
- **R³**: gleich oder verschieden sein kann und einen monovalenten, aliphatisch gesättigten oder ungesättigten, halogensubstituierten oder unsubstituierten Kohlenwasserstoffrest mit 1 bis 12 Kohlenstoffatomen darstellt,
- **A**: eine Halogen, -OH, -OR⁴ oder -OCOR⁴, und
- **B**: -NR⁵_{3-b} ist,
- **R⁴**: einen monovalenten Kohlenwasserstoffrest mit 1 bis 12 Kohlenstoffatomen darstellt,
- **R⁵**: ein Wasserstoffatom ist oder hat die gleiche Bedeutung wie R³ hat,
- **a**: 1, 2 oder 3 ist,
- **b**: 1 oder 2 ist,
oder einem Organopolysiloxan sind bestehend aus Einheiten der allgemeinen Formel (4)

R³_{z}SiO_{(4-z)/2} (4),

worin
- **R³**: die zuvor genannte Bedeutung hat und
- **z**: 1, 2 oder 3 ist.

Hierzu zählen beispielsweise Alkylchlorsilane, wie beispielsweise Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie beispielsweise Dimethyldimethoxysilan, Dimethyldiethoxysilan, Trimethylmethoxysilan und Trimethylethoxysilan; Trimethylsilanol; zyklische Diorgano(poly)siloxane, wie beispielsweise Octamethylcyclotetrasiloxan, Dekamethylcyclopentasiloxan; lineare Diorganopolysiloxane, wie beispielsweise Dimethylpolysiloxane mit Trimethylsiloxy-Endgruppen sowie Dimethylpolysiloxane mit Silanol- oder Alkoxy-Endgruppen; Disilazane, wie beispielsweise Hexaalkyldisilazane, insbesondere Hexamethyldisilazan, Divinyltetramethyldisilazan, Bis(trifluorpropyl)tetramethyldisilazan; zyklische Dimethylsilazane, wie beispielsweise Hexamethylcyclotrisilazan.

Es können auch Mischungen der voranstehend genannten Hydrophobierungsmittel eingesetzt werden. Um die Hydrophobierung zu beschleunigen, ist auch der Zusatz von katalytisch aktiven Additiven, wie beispielsweise Aminen oder Metallhydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugte Füllstoffe weisen infolge einer Oberflächenbehandlung einen Kohlenstoffgehalt von mindestens 0,01 bis maximal 20 Gew.-%, bevorzugt zwischen 0,1 und 10 Gew.-%, besonders bevorzugt zwischen 0,5 bis 5 Gew.-% auf. Besonders bevorzugt sind oberflächenbehandelte Kieselsäuren mit einem Gehalt an aliphatisch ungesättigten Gruppen, beispielsweise Sigebundenen Vinylgruppen, zwischen 0,01 und 2 Gew.-%.

Bestandteil (C) ist ein SiH-funktionelles Vernetzungsmittel, dessen Zusammensetzung der durchschnittlichen Formel (5)

HₘR²ₙSiO_{(4-m-n)/2} (5)

entspricht, worin
- **R²**: die voranstehend angegebene Bedeutung hat,
- **m**: eine positive Zahl ist, wobei die Relation 0.005 ≤ m ≤ 1 erfüllt ist, und
- **n**: eine positive Zahl ist, wobei die Relation 0.005 ≤ n ≤ 2 erfüllt ist,
mit der Maßgabe, dass pro Vernetzermolekül durchschnittlich mindestens 3 Si-gebundene Wasserstoffatome vorhanden sind.

Der Wasserstoffgehalt des Vernetzungsmittels (C), welcher sich ausschließlich auf direkt an Siliciumatome gebundene Wasserstoffatome bezieht, liegt vorzugsweise im Bereich 0.002 bis 1,7 Gew.-% Wasserstoff, besonders bevorzugt zwischen 0.1 und 1.7 Gew.-%. Das Vernetzungsmittel (C) enthält mindestens 3 und höchstens 600 Siliciumatome pro Molekül, vorzugsweise 4 bis 200 Siliciumatome. Die Struktur des Vernetzungsmittels (C) kann linear, verzweigt, cyclisch oder harz- bzw. netzwerkartig sein. Die im Vernetzungsmittel (C) enthaltenen Reste R² werden bevorzugt so gewählt, dass diese mit den im Bestandteil (A) befindlichen Resten verträglich sind, so dass die Bestandteile (A) und (C) mischbar sind. Besonders bevorzugte Vernetzungsmittel sind Poly(dimethylsiloxan-co-methylhydrogensiloxane).

Das Vernetzungsmittel (C) ist vorzugsweise in einer solchen Menge in der vernetzbaren Siliconkautschukmasse enthalten, dass das Molverhältnis von SiH-Gruppen zu den alkenylfunktionellen Einheiten des Bestandteiles (A) bei 0.5 bis 5, insbesondere bei 1.0 bis 3.0 liegt. Das Vernetzungsmittel (C) kann auch eine Mischung unterschiedlicher Vernetzungsmittel sein.

Bestandteil (D) ist Ammoniak oder eine Ammoniak freisetzende Verbindung.

Die Herstellung von Siliconmassen, die einen Ammoniakgehalt von 10 bis 110 Gew.-ppm aufweisen, kann im Grunde auf beliebige Art und Weise erfolgen. Beispielsweise kann gasförmiger Ammoniak direkt in die Siliconmasse eingeleitet werden. Zweckmäßiger ist aber die Zugabe und das Einmischen einer wässrigen Ammoniaklösung bekannter Konzentration, was die Einstellung des gewünschten Ammoniakgehaltes erleichtert. Des weiteren können der Siliconmasse Ammoniak freisetzende Verbindungen zudosiert werden, sofern diese keine unerwünschten Nebenprodukte in der Siliconmasse bilden. Geeignete Ammoniak freisetzende Verbindungen sind beispielsweise Silazane, wie beispielsweise Hexamethyldisilazan und Divinyltetramethyldisilazan, welche in Gegenwart von Kieselsäuren zu hydrolysieren vermögen und dabei Ammoniak freisetzen. Weitere durch Hydrolyse Ammoniak bildende Verbindungen sind die Amide, Imide und Nitride der Alkali- und Erdalkalimetalle. Erfolgt die Herstellung der Siliconmasse nach dem eingangs erwähnten in-situ Verfahren unter Verwendung von Silazanen als Hydrophobierungsmittel, wird während des Hydrophobierungsschrittes Ammoniak in erheblicher Menge freigesetzt, so dass allein deshalb ein Ausheizen der Siliconmasse unverzichtbar ist, wobei dabei zugleich auch unerwünschte flüchtige Rückstände, wie beispielsweise Silazanrückstände, Wasser, Silanole, kurzkettige Siloxane oder Zyklen, entfernt werden. Damit bietet dieses in-situ Verfahren eine weitere Möglichkeit, gezielt den gewünschten Ammoniakgehalt einzustellen, indem man die Ausheizbedingungen, wie beispielsweise Temperatur, Vakuum oder Knetzeit, geeignet festlegt. Thermolytisch Ammoniak abspaltende Verbindungen sind beispielsweise Ammoniumkarbonat, -hydrogenkarbonat und Harnstoff.

Bevorzugt sind Ammoniakgehalte zwischen 10 und 80 Gew.-ppm bezogen auf die Gesamtmasse der Bestandteile A, B, C und D. Ein Absenken des Ammoniakgehaltes auf weniger als 10 Gew.-ppm führt zu einer Verschlechterung der Lagerstabilität, d.h., zu einer dem Stand der Technik entsprechenden Viskositätszunahme während der Lagerzeit. Während die Verschlechterung der Lagerstabilität bei zu niedrigen Ammoniakgehalten jedoch eher moderat ausfällt, führen zu hohe Ammoniakgehalte von oberhalb 110 ppm nicht nur zu einer drastischen Verschlechterung der Lagerstabilität, d.h. zu einem dramatischen Viskositätsanstieg, sondern darüber hinaus zu einer nachteiligen Verringerung der Vernetzungsgeschwindigkeit, beispielsweise durch die Inhibierung des Hydrosilylierungskatalysators, zu niedrigerem Modul des Siliconelastomers und zunehmender Formklebrigkeit im Werkzeug bei der Verarbeitung im Spritzguss.

Die ausgezeichnete Viskositätsstabilität der zwischen 10 bis 110 Gew.-ppm Ammoniak enthaltenden erfindungsgemäßen Siliconmassen deutet darauf hin, dass das Vorhandensein von Ammoniak im erfindungsgemäßen Bereich entweder die Bildung rheologisch aktiver Spezies in der Siliconmasse verursacht, welche sich förderlich auf die Fließfähigkeit und die Viskositätsstabilität auswirken und auf diese Weise einer Strukturbildung entgegenwirken, oder aber, die hohe Affinität des Ammoniaks zum Füllstoff ist mit einer Desorption von Füllstoffaggregate überbrückenden Polymerketten verbunden, wodurch ebenfalls die Strukturbildung durch polymerüberbrückte Kieselsäureaggregate ausgeschlossen wird.

Der erfindungsgemäße Vorteil 10 bis 110 Gew.-ppm Ammoniak enthaltender Siliconmassen besteht in der ausgezeichneten Lagerstabilität hinsichtlich der rheologischen Eigenschaften, selbst wenn diese pyrogen hergestellte, hydrophobierte Kieselsäure sowie SiH-Vernetzer enthalten. Zudem ist der im beanspruchten (niedrigen) Bereich liegende Ammoniakgehalt mit keinerlei negativen Auswirkungen, wie Formklebrigkeit, Härteabfall, Verlangsamung der Vernetzungsgeschwindigkeit etc. verbunden. Auch das mechano-elastische Eigenschaftsprofil der aus den erfindungsgemäßen Siliconmassen hergestellten Elastomere zeigt keinerlei Veränderungen infolge des Gehalts an Ammoniak in der unvernetzten Masse.

Die im europäischen Patent EP 0 731 131 B1 beanspruchten additionsvernetzbaren, pyrogen hergestellte Kieselsäure enthaltenden Siliconmassen, die zum Zweck der Verringerung des Druckverformungsrestes des daraus hergestellten ungetemperten Siliconelastomers.einen Ammoniakgehalt berechnet als Stickstoff von 10 bis 500 Gew.-ppm bezogen auf die Gesamtmasse der Bestandteile (A), (C) und (E) aufweisen, entsprechen einem Ammoniakgehalt von 12 bis 607 Gew.-ppm. Für die in dem europäischen Patent EP 0 731 131 B1 im Beispiel 5 und Vergleichsbeispiel 4 beschriebenen pyrogene Kieselsäure enthaltenden Siliconmassen wird die Verringerung des Druckverformungsrestes durch Zugabe wässrigen Ammoniaks demonstriert. Überraschenderweise lässt sich diese Reduzierung der Werte des Druckverformungsrestes weder an den ungetemperten noch getemperten Siliconelastomeren, die aus den hier untersuchten pyrogene Kieselsäure enthaltenden Siliconmassen mit einem Ammoniakgehalt zwischen 10 und 110 Gew.-ppm hergestellt wurden, nachweisen. Wie in den Beispielen gezeigt werden wird, sind Ammoniakgehalte von 10 bis 110 Gew.-ppm vielmehr ohne Einfluss auf den Druckverformungsrest. Eine weitere Erhöhung des Ammoniakgehaltes von oberhalb 110 Gew.-ppm ist sogar mit einer zunehmenden Verschlechterung des Druckverformungsrestes sowohl der ungetemperten als auch der getemperten Siliconelastomere verbunden. Der Zusammenhang zwischen Ammoniakgehalt und rheologischem Verhalten der Siliconmasse wird im Patent EP 0 731 131 B1 an keiner Stelle offenbart oder nahegelegt. Vielmehr haben die im europäischen Patent EP 0 731 131 B1 beanspruchten hohen Gehalte an Ammoniak von bis zu 500 Gew.-ppm zur Folge, dass während der Lagerzeit SiH-Gruppen des Vernetzers bedingt durch das Vorhandensein von Feuchtigkeitsspuren beschleunigt, d.h. katalysiert, zu SiOH-Gruppen hydrolysiert werden, was wiederum zu einem Viskositätsanstieg führt, Vulkanisationsstörungen verursacht und erhöhte Werte im Druckverformungsrest zur Folge hat.

Die als Hydrosilylierung bezeichnete Additionsreaktion zwischen den Alkenylgruppen des Bestandteiles (A) und den SiH-Gruppen des Vernetzungsmittels (C) erfolgt bevorzugt in Gegenwart eines Katalysators. Grundsätzlich können alle dem Stand der Technik entsprechenden und typischerweise in additionsvernetzbaren Siliconkautschukmassen eingesetzten Hydrosilylierungskatalysatoren verwendet werden. Dies sind insbesondere Metalle, wie Platin, Rhodium, Palladium, Ruthenium und Iridium, sowie sich von diesen ableitende metallorganische Verbindungen; bevorzugt sind Platin und Platinverbindungen, besonders bevorzugt sind Komplexverbindungen des Platins mit Vinylsiloxanen, wie beispielsweise sym-Divinyltetramethyldisiloxan (Karstedt-Katalysator).

Die Menge des eingesetzten Hydrosilylierungskatalysators richtet sich im Wesentlichen nach der gewünschten Vernetzungsgeschwindigkeit sowie ökonomischen Gesichtspunkten. Vorzugsweise beträgt der Gehalt einer additionsvernetzbaren erfindungsgemäßen Siliconkautschukgesamtmasse an Hydrosilylierungskatalysator (bezogen auf das darin enthaltene Metall) zwischen 0.05 und 1000 Gew.-ppm, besonders bevorzugt zwischen 1 und 100 Gew.-ppm.

Somit ist weiterhin ein Verfahren zur Herstellung von Siliconelastomeren, dadurch gekennzeichnet, dass eine erfindungsgemäße Siliconmasse verwendet wird, Gegenstand dieser Erfindung. Besonders bevorzugt ist hierbei ein Verfahren, in dem die Siliconelastomere mittels Additionsreaktion vernetzt werden. Hierbei finden vorzugsweise die zuvor genannten Hydrosilylierungskatalysatoren Verwendung.

Weiterhin sind Siliconelastomere Gegenstand dieser Erfindung, die durch ein Verfahren zur Vernetzung der erfindungsgemäßen Siliconmasse erhalten werden.

### Beispiele

Beispielhaft kann der Ammoniakgehalt mit Hilfe von Stickstoffanalysatoren bestimmt werden, wobei die Probensubstanz bei hohen Temperaturen pyrolisiert wird und die freigesetzten Stickstoffverbindungen oxidiert werden. Die dabei freiwerdende Energie kann im Chemilumineszenz-Detektor gemessen werden. Es können auch andere Verfahrensmethoden zur Bestimmung des Stickstoff-Gehalts oder Ammoniakgehalts verwendet werden.

Die Charakterisierung der Siliconelastomereigenschaften erfolgte gemäß DIN 53505 (Shore A), DIN 53517 (Druckverformungsrest). Die Viskosität wurde bei einer Temperatur von 25°C und einer Scherrate von 0,9 s⁻¹ bestimmt.

### Beispiel 1 (nicht erfindungsgemäß):

In einem Kneter wurden 156 g eines vinyldimethylsiloxyterminierten Polydimethylsiloxans mit einer Viskosität von 20.000 mPa*s (25°C) vorgelegt und mit 27 g Hexamethyldisilazan und 9,3 g Wasser gemischt, anschließend mit 100 g pyrogener Kieselsäure mit einer BET-Oberfläche von 300 m²/g vermischt, auf 100°C erwärmt und anschließend 1 Stunde geknetet. Danach wurden bei 150°C 24 Stunden flüchtige Bestandteile im Vakuum entfernt und anschließend mit 141 g vinyldimethylsiloxyterminiertem Polydimethylsiloxan mit einer Viskosität von 20.000 mPa*s verdünnt.
Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 5 ppm (4 ppm Stickstoff).

### Beispiel 2 (erfindungsgemäß):

Im Unterschied zu Beispiel 1 wurden bei 150°C 2 Stunden flüchtige Bestandteile im Vakuum entfernt. Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 15 ppm (12 ppm Stickstoff).

### Beispiel 3 (erfindungsgemäß):

Im Unterschied zu Beispiel 1 wurden bei 150°C 1 Stunde flüchtige Bestandteile im Vakuum entfernt. Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 40 ppm (33 ppm Stickstoff).

### Beispiel 4 (erfindungsgemäß):

Im Unterschied zu Beispiel 1 wurden bei 150°C 30 Minuten flüchtige Bestandteile im Vakuum entfernt. Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 70 ppm (58 ppm Stickstoff).

### Beispiel 5 (nicht erfindungsgemäß):

Im Unterschied zu Beispiel 1 wurden bei 150°C 20 Minuten flüchtige Bestandteile im Vakuum entfernt.
Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,4Gew.-% hinzugefügt. Der Ammoniakgehalt dieser Mischung betrug 150 ppm (124 ppm Stickstoff).

### Beispiel 6 (nicht erfindungsgemäß):

Im Unterschied zu Beispiel 1 wurden bei 150°C 10 Minuten flüchtige Bestandteile im Vakuum entfernt.

Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48Gew.-% hinzugefügt. Der Ammoniakgehalt dieser Mischung betrug 250 ppm (20.6 ppm Stickstoff).

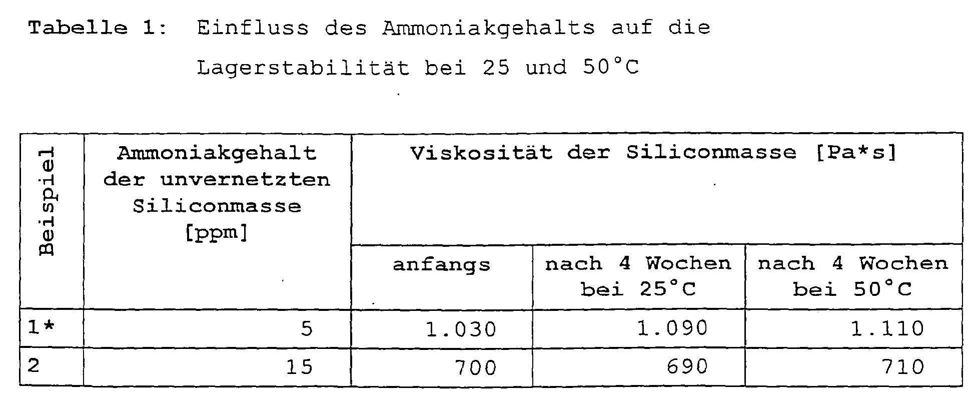

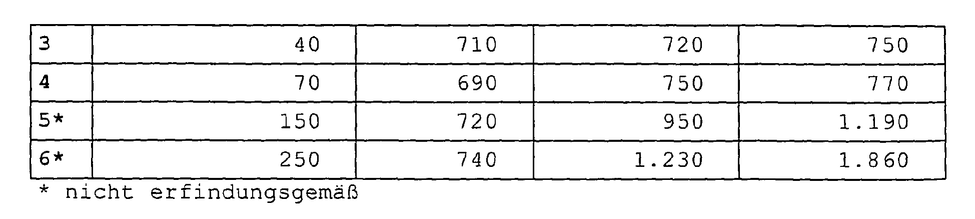

Aus der Tabelle 1 ist ersichtlich, dass ein niedriger Ammoniakgehalt von 10-110 ppm eine niedrige Anfangsviskosität und eine ausreichende Lagerstabilität gewährleistet, das Nichtvorhandensein von Ammoniak sowie nicht erfindungsgemäß hohe Gehalte an Ammoniak zu einem Viskositätsanstieg der Siliconmasse führen.

### Beispiel 7 (nicht erfindungsgemäß):

Zu 100 g der in Beispiel 1 hergestellten Mischung, die 3,5 Gew.-% SiH-Vernetzer enthielt, wurden 0,08 g einer Lösung mit einem Pt-Gehalt von 1 Gew.-%, die einen Platin-sym-Divinyltetramethyldisiloxan-Komplex enthält, und 0,07 g Ethinylcyclohexanol hinzugefügt. Diese additionsvernetzende Siliconmasse wurde anschließend in einer hydraulischen Presse bei einer Temperatur von 165°C innerhalb von 2 Minuten zu einer Siliconelastomerfolie mit einer Härte von 40 Shore A vernetzt. Der Ammoniakgehalt dieser vernetzten, ungetemperten Siliconelastomerfolie betrug 7 ppm. Der Druckverformungsrest lag bei 58% (22 Stunden, 175°C). Nach dem 4-stündigen Tempern bei 200°C betrug der Ammoniakgehalt 6 ppm und der Druckverformungsrest konnte auf 15% verringert werden (22 Stunden, 175°C).

### Beispiel 8 (erfindungsgemäß):

Im Unterschied zu Beispiel 7 wurde die in Beispiel 2 hergestellt Mischung verwendet.

### Beispiel 9 (erfindungsgemäß) :

Im Unterschied zu Beispiel 7 wurde die in Beispiel 3 hergestellt Mischung verwendet.

### Beispiel 10 (erfindungsgemäß):

Im Unterschied zu Beispiel 7 wurde die in Beispiel 4 hergestellt Mischung verwendet.

### Beispiel 11 (nicht erfindungsgemäß):

Im Unterschied zu Beispiel 7 wurde die in Beispiel 5 hergestellt Mischung verwendet.

### Beispiel 12 (nicht erfindungsgemäß):

Im Unterschied zu Beispiel 7 wurde die in Beispiel 6 hergestellt Mischung verwendet.

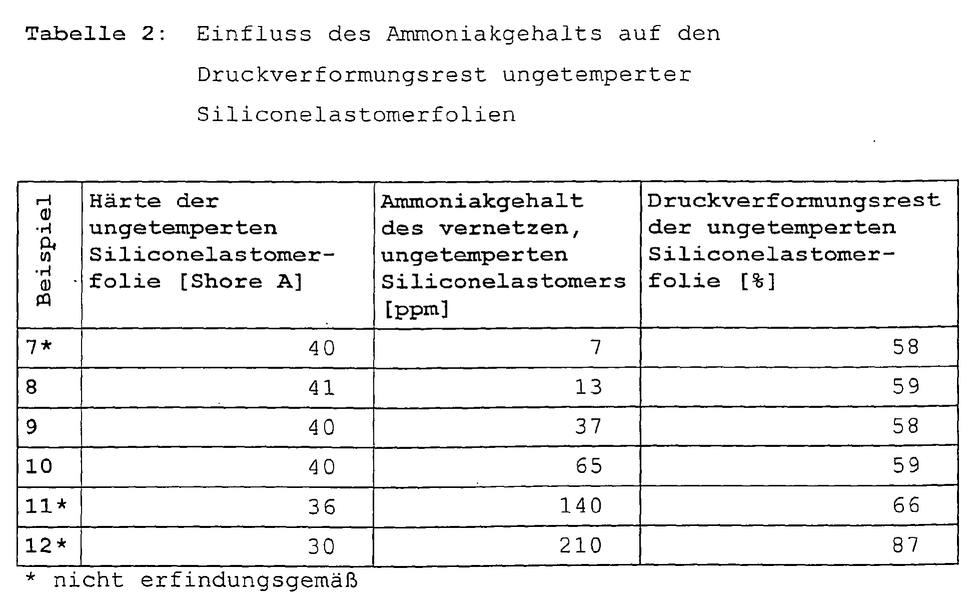

Aus der Tabelle 2 ist ersichtlich, dass ein Ammoniakgehalt von 10-110 ppm keinen Einfluss auf den Druckverformungsrest ungetemperter Siliconelastomere hat. Eine Erhöhung des Ammoniakgehalts auf über 110 ppm verschlechtert jedoch den Druckverformungsrest ungetemperter Siliconelastomere.

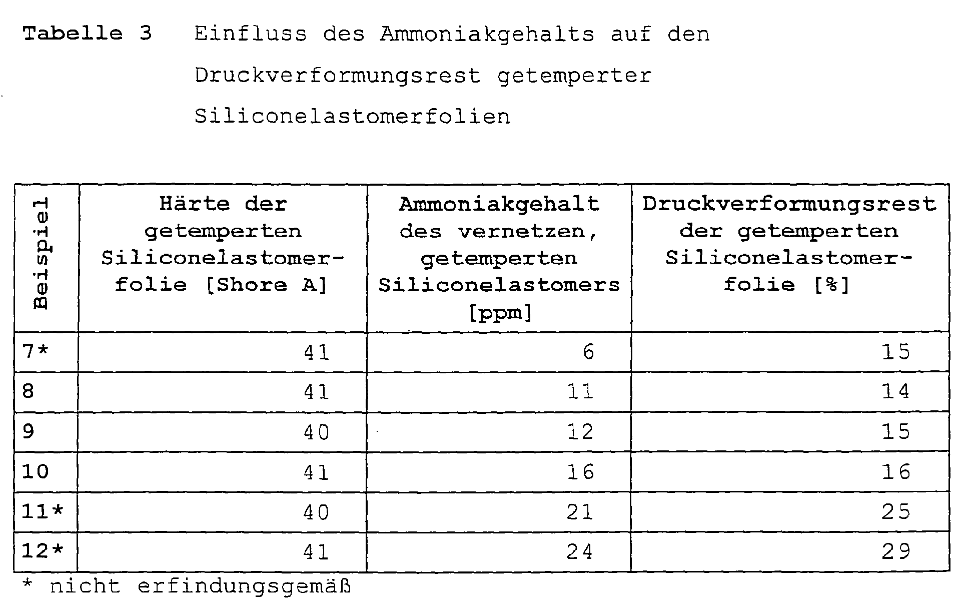

Aus der Tabelle 3 ist ersichtlich, dass ein vor der Temperung vorhandener Ammoniakgehalt von 10-110 ppm keinen Einfluss auf den Druckverformungsrest getemperter Siliconelastomere hat. Ein vor der Temperung vorhandener Ammoniakgehalt von mehr als 110 ppm verschlechtert jedoch auch den Druckverformungsrest der getemperten Siliconelastomere.

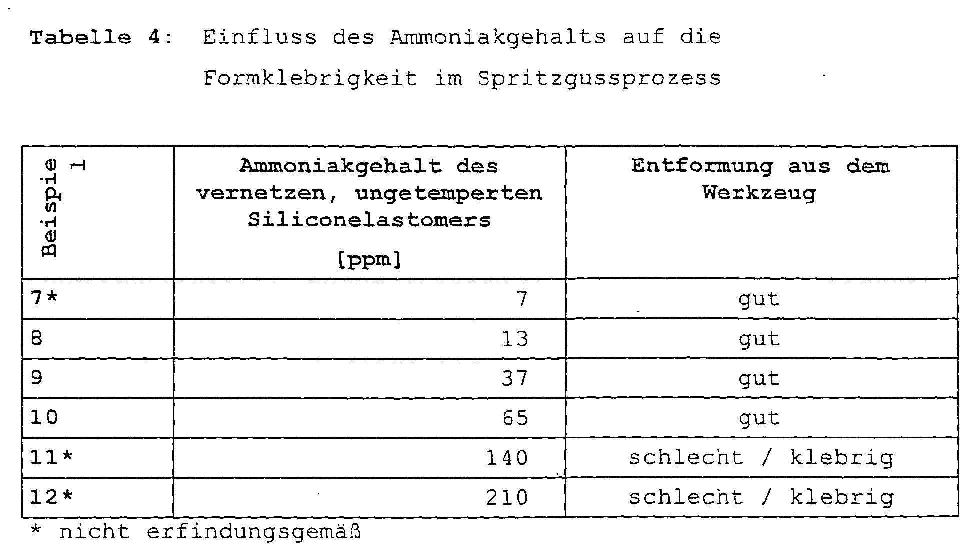

Aus der Tabelle 4 ist ersichtlich, dass ein Ammoniakgehalt von mehr als 110 ppm negative Auswirkungen auf die Verarbeitbarkeit im Spritzguss hat.

### Beispiel 13 (nicht erfindungsgemäß):

In einem Kneter wurden 156 g eines vinyldimethylsiloxyterminierten Polydimethylsiloxans mit einer Viskosität von 20.000 mPa*s (25°C) vorgelegt und mit 110 g vorhydrophobierter pyrogener Kieselsäure mit einer BET-Oberfläche von 300 m²/g, einem Kohlenstoffgehalt von 4% und einem Ammoniakgehalt von 820 ppm vermischt, auf 100°C erwärmt und anschließend 1 h geknetet. Danach wurden bei 150°C 24 Stunden flüchtige Bestandteile im Vakuum entfernt und anschließend mit 141 g vinyldimethylsiloxyterminiertem Polydimethylsiloxan mit einer Viskosität von 20.000 mPa*s verdünnt.

Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 6 ppm (5 ppm Stickstoff).

### Beispiel 14 (erfindungsgemäß):

Im Unterschied zu Beispiel 13 wurden bei 150°C 1 Stunde flüchtige Bestandteile im Vakuum entfernt. Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem SiH-Gehalt von 0,48% hinzugefügt. Der Ammoniakgehalt dieser Mischung betrug 50 ppm (41 ppm Stickstoff).

### Beispiel 15 (nicht erfindungsgemäß):

Im Unterschied zu Beispiel 13 wurden bei 150°C 10 Minuten flüchtige Bestandteile im Vakuum entfernt. Zu 100 g der oben hergestellten Masse wurden 3,5 g eines Mischpolymerisats aus Dimethylsiloxy-, Methylhydrogensiloxy- und Trimethylsiloxy-Einheiten mit einer Viskosität von 300 mPa*s bei 25°C und einem (Si)H-Gehalt von 0,48 Gew.-% hinzugefügt. Der Ammoniakgehalt dieser Mischung betrug 205 ppm (169 ppm Stickstoff).

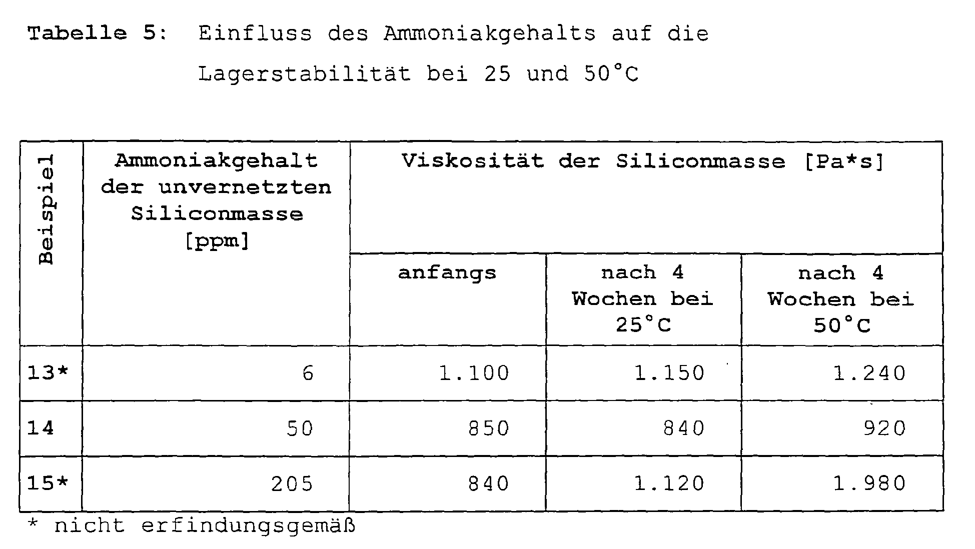

Aus der Tabelle 5 ist ersichtlich, dass ein erfindungsgemäß niedriger Ammoniakgehalt von 10-110 ppm eine niedrige Anfangsviskosität und eine ausreichende Lagerstabilität gewährleistet.

### Beispiel 16 (nicht erfindungsgemäß):

Zu 100 g der in Beispiel 13 hergestellten Mischung, die 3,5 Gew.-% SiH-Vernetzer enthielt, wurden 0,08 g einer Lösung mit einem Pt-Gehalt von 1 Gew.-%, die einen Platin-sym-Divinyltetramethyldisiloxan-Komplex enthält, und 0,07 g Ethinylcyclohexanol hinzugefügt. Diese additionsvernetzende Siliconmasse wurde anschließend in einer hydraulischen Presse bei einer Temperatur von 165°C innerhalb von 2 Minuten zu einer Siliconelastomerfolie mit einer Härte von 42 Shore A vernetzt. Der Ammoniakgehalt dieser vernetzten, ungetemperten Siliconelastomerfolie betrug 5 ppm. Der Druckverformungsrest lag bei 55% (22 Stunden, 175°C). Nach dem 4-stündigen Tempern bei 200°C betrug der Ammoniakgehalt 5 ppm und der Druckverformungsrest konnte auf 11% verringert werden (22 Stunden, 175°C).

### Beispiel 17 (erfindungsgemäß):

Im Unterschied zu Beispiel 16 wurde die in Beispiel 14 hergestellt Mischung verwendet.

### Beispiel 18 (nicht erfindungsgemäß):

Im Unterschied zu Beispiel 16 wurde die in Beispiel 15 hergestellt Mischung verwendet.

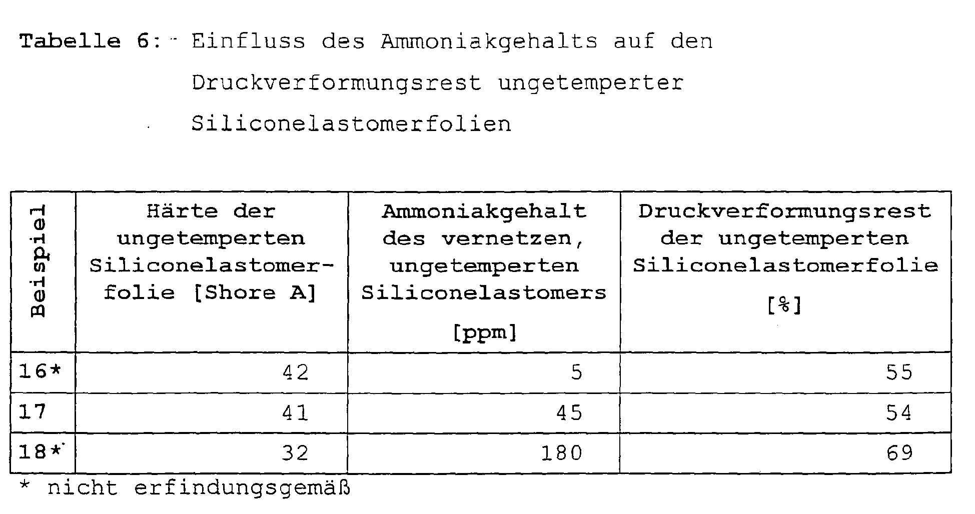

Aus der Tabelle 6 ist ersichtlich, dass ein Ammoniakgehalt von 10-110 ppm keinen signifikanten Einfluss auf den Druckverformungsrest ungetemperter Siliconelastomere hat. Eine Erhöhung des Ammoniakgehalts auf über 110 ppm verschlechtert jedoch den Druckverformungsrest ungetemperter Siliconelastomere.

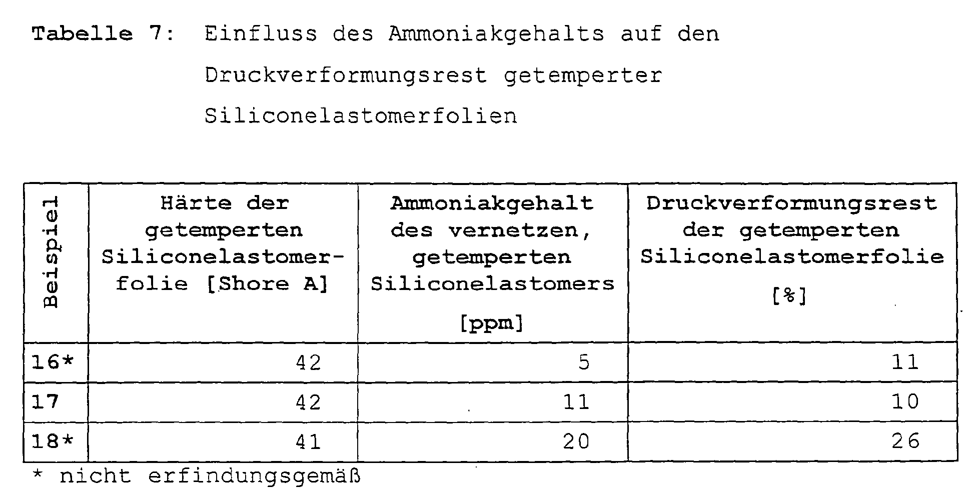

Aus der Tabelle 7 ist ersichtlich, dass ein vor der Temperung vorhandener Ammoniakgehalt von 10-110 ppm keinen signifikanten Einfluss auf den Druckverformungsrest getemperter Siliconelastomere hat. Ein vor der Temperung vorhandener Ammoniakgehalt von mehr als 110 ppm verschlechtert jedoch auch den Druckverformungsrest der getemperten Siliconelastomere.

## Patentansprüche

1. Lagerstabile, additionsvernetzbare Siliconmassen, enthaltend
(A) 100 Gewichts-Teile mindestens eines Polydiorganosiloxans mit einem mittleren Polymerisationsgrad zwischen 20 und 10.000 und einem Anteil alkenylfunktioneller Organosiloxy-Einheiten zwischen 0.02 und 20 Mol.-%,
(B) 5 - 90 Gewichts-Teile mindestens einer pyrogen hergestellten, hydrophobierten Kieselsäure mit einer spezifischen Oberfläche von mindestens 50 m²/g,
(C) 0.1 - 50 Gewichts-Teile mindestens einer siliziumorganischen Verbindung, welche mindestens drei an Silizium gebundene Wasserstoffatome pro Molekül enthält,
(D) 10-110 Gew.-ppm bezogen auf die Gesamtmasse der Bestandteile (A) bis (C) Ammoniak oder einen Anteil einer Ammoniak freisetzenden Verbindung, mit der Maßgabe, dass dieser Anteil einer Freisetzung von 10-110 Gew.-ppm Ammoniak entspricht, wobei die Freisetzung des Ammoniaks bevorzugt thermisch oder hydrolytisch erfolgt, und
(E) Hydrosilylierungskatalysator,
worin die Bestandteile (A) bis (E) zu einer einzigen Komponente zusammengefasst oder in mehreren Komponenten vorliegen können.

2. Siliconmasse gemäß Anspruch 1, **dadurch gekennzeichnet, dass** die Siliconmasse aus zwei Komponenten besteht, mit der Maßgabe,dass die eine den Hydrosilylierungskatalysator (E) und die andere den SiH-haltigen Vernetzer (C) enthält.

3. Siliconmasse gemäß Anspruch 1 oder 2, **dadurch gekennzeichnet, dass** das Polydiorganosiloxan (A) der durchschnittlichen allgemeinen Formel (1) entspricht,
**R¹ₓR²_{y}SiO_{(4-x-y)/2}** (1),
worin
**R¹** einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff-Mehrfachbindungen enthält, bedeutet,
**R²** eine OH-Gruppe ist oder ein einwertiger, gegebenenfalls halogen- oder cyanosubstituierter, über SiC-gebundener C₁-C₁₀-Kohlenwasserstoffrest ist, welcher keine aliphatischen Kohlenstoff-Kohlenstoff-Mehrfachbindungen enthält,
**x** eine positive Zahl ist, mit der Maßgabe, dass durchschnittlich mindestens zwei Reste R¹ pro Polydiorganosiloxan-Kette vorhanden sind, und
**y** eine Zahl zwischen 1,6 und 2,0 ist,
worin die Reste **R¹** sowie **R²** jeweils gleich oder verschieden sein können.

4. Siliconmasse gemäß einem der Ansprüche 1 bis 3, **dadurch gekennzeichnet, dass** als Hydrophobierungsmittel der pyrogen hergestellten, hydrophobierten Kieselsäure (B) eine Verbindung der allgemeinen Formel (2) oder (3)
**R³₄₋ₐSiAₐ** (2)
**(R³₃Si)_{b}B** (3),
oder ein Organopolysiloxan bestehend aus Einheiten der allgemeinen Formel (4)
**R³_{z}SiO_{(4-z)/2}** (4),
worin
**R³** gleiche oder verschiedene monovalente, aliphatisch gesättigte oder ungesättigte, halogensubstituierte oder unsubstituierte Kohlenwasserstoffreste mit 1 bis 12 Kohlenstoffatomen,
**A** Halogen, -OH, -OR⁴ oder -OCOR⁴,
**B** -NR⁵_{3-b},
**R⁴** einen monovalenten Kohlenwasserstoffrest mit 1 bis 12 Kohlenstoffatomen,
**R⁵** ein Wasserstoffatom oder R³,
**a** 1, 2 oder 3,
**b** 1 oder 2 und
**z** 1, 2 oder 3
bedeuten, verwendet wird.

5. Siliconmasse gemäß einem der Ansprüche 1 bis 4, **dadurch gekennzeichnet, dass** der Bestandteil (C) ein SiH-funktionelles Vernetzungsmittel mit der durchschnittlichen Formel (5)
**HₘR²ₙSiO_{(4-m-n)/2}** (5),
worin
**R²** eine OH-Gruppe ist oder ein einwertiger, unsubstituierter oder halogen- oder cyanosubstituierter, über SiC-gebundener C₁-C₁₀-Kohlenwasserstoffrest ist, welcher keine aliphatischen Kohlenstoff-Kohlenstoff-Mehrfachbindungen enthält,
**m** eine positive Zahl ist, wobei die Relation 0.005 ≤ m ≤ 1 erfüllt ist, und
**n** eine positive Zahl ist, wobei die Relation 0.005 ≤ n ≤ 2 erfüllt ist,
mit der Maßgabe, dass pro Vernetzermolekül durchschnittlich mindestens 3 Si-gebundene Wasserstoffatome vorhanden sind, ist.

6. Siliconmasse gemäß einem der Ansprüche 1 bis 5, **dadurch gekennzeichnet, dass** die Hydrophobierung der pyrogen hergestellten Kieselsäure (B) in einem separaten Verfahrensschritt vor dem Vermischen mit dem Polydiorganosiloxan (A) erfolgt.

7. Siliconmasse gemäß einem der Ansprüche 1 bis 6, **dadurch gekennzeichnet, dass** der Ammoniak (D) gasförmig oder in wässriger Lösung zugesetzt wird.

8. Siliconmasse gemäß einem der Ansprüche 1 bis 6, **dadurch gekennzeichnet, dass** der Ammoniak (D) in Form einer Verbindung ausgewählt aus der Gruppe enthaltend Silazane sowie Amide, Imide und Nitride der Alkali- und Erdalkalimetalle zugesetzt wird, die den Ammoniak (D) in der Siliconmasse bildet.

9. Siliconmasse gemäß einem der Ansprüche 1 bis 8, **dadurch gekennzeichnet, dass** diese bezogen auf die Gesamtmasse der Bestandteile (A) bis (C) 10 - 80 Gew.-ppm Ammoniak oder einen Anteil einer Ammoniak freisetzenden Verbindung enthält,der der Freisetzung von 10 - 80 Gew.-ppm Ammoniak entspricht.

10. Verfahren zur Herstellung einer Siliconmasse gemäß einem der Ansprüche 1 bis 9, **dadurch gekennzeichnet, dass**
(A) 100 Gewichts-Teile mindestens eines Polydiorganosiloxans mit einem mittleren Polymerisationsgrad zwischen 20 und 10.000 und einem Anteil alkenylfunktioneller Organosiloxy-Einheiten zwischen 0.02 und 20 Mol.-%,
(B) 5 - 90 Gewichts-Teile mindestens einer pyrogen hergestellten, hydrophobierten Kieselsäure mit einer spezifischen Oberfläche von mindestens 50 m²/g,
(C) 0.1 - 50 Gewichts-Teile mindestens einer siliziumorganischen Verbindung, welche mindestens drei an Silizium gebundene Wasserstoffatome pro Molekül enthält,
(D) 10-110 Gew.-ppm bezogen auf die Gesamtmasse der Bestandteile (A) bis (C) Ammoniak oder einen Anteil einer Ammoniak freisetzenden Verbindung, mit der Maßgabe, dass dieser Anteil einer Freisetzung von 10-110 Gew.-ppm Ammoniak entspricht, wobei die Freisetzung des Ammoniaks bevorzugt thermisch oder hydrolytisch erfolgt, und
(E) Hydrosilylierungskatalysator,
zu einer einzigen Komponente oder in mehreren Komponenten zusammengeführt werden.

11. Verfahren gemäß Anspruch 10, **dadurch gekennzeichnet, dass** die Hydrophobierung der feinteiligen Feststoffe (B) in Gegenwart eines Polyorganosiloxans nach dem in-situ Verfahren erfolgt.

12. Verfahren gemäß Anspruch 10, **dadurch gekennzeichnet, dass** die Hydrophobierung der feinteiligen Feststoffe (B) vor der Einarbeitung in das Polyorganosiloxan erfolgt.

13. Verfahren gemäß einem der Ansprüche 10 bis 12, **dadurch gekennzeichnet, dass** die Verfahren batchweise oder kontinuierlich erfolgen.

14. Verfahren zur Herstellung von Siliconelastomeren, **dadurch gekennzeichnet, dass** eine Siliconmasse gemäß einem der Ansprüche 1 bis 9 verwendet wird.

15. Verfahren gemäß Anspruch 14, **dadurch gekennzeichnet, dass** die Siliconelastomere durch eine Additionsreaktion vernetzt werden.

16. Siliconelastomere erhältlich nach einem der Ansprüche 14 oder 15.
